# EUROPÄISCHE PATENTSCHRIFT

(11) **EP 2 344 566 B1**
(45) Veröffentlichungstag und Bekanntmachung des Hinweises auf die Patenterteilung: **23.11.2016**
(21) Anmeldenummer: 09782687.9
(22) Anmeldetag: 07.09.2009
(51) Int. Cl.: C08G 65/327, C08G 85/00

(54) **VERFAHREN ZUR HERSTELLUNG PHOSPHATIERTER POLYKONDENSATIONSPRODUKTE UND DEREN VERWENDUNG**
METHOD FOR PRODUCING PHOSPHATED POLYCONDENSATION PRODUCTS AND THE USE THEREOF
PROCÉDÉ DE FABRICATION DE PRODUITS DE POLYCONDENSATION PHOSPHATÉS ET LEUR UTILISATION

(30) Priorität: 06.10.2008 EP 08165916
(43) Veröffentlichungstag der Anmeldung: 20.07.2011
(73) Patentinhaber: Construction Research & Technology GmbH, 83308 Trostberg (DE)
(72) Erfinder: KRAUS, Alexander, 83552 Evenhausen (DE); DIERSCHKE, Frank, 55276Oppenheim (DE); BECKER, Fabian, 83308 Trostberg (DE); SCHUHBECK, Thomas, 83308 Trostberg (DE); GRASSL, Harald, 84550 Feichten an der Alz (DE); GROESS, Karin, 83119 Obing (DE)
(74) Vertreter: BASF IP Association
(86) Internationale Anmeldenummer: PCT/EP2009/061545
(87) Internationale Veröffentlichungsnummer: WO 2010/040611

(56) Entgegenhaltungen:
- WO-A1-03/072632
- WO-A1-2006/042709
- US-A- 3 275 667

## Beschreibung

Die vorliegende Erfindung betrifft ein Verfahren zur Herstellung eines phosphatierten Polykondensationsproduktes sowie dessen Verwendung als Zusatzmittel in einer Baustoffmischung.

Es ist bekannt, dass man wässrigen Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, Zusatzmittel in Form von Dispergiermitteln zusetzt. Derartige Zusatzmittel sind in der Lage, die Bildung von Feststoffagglomeraten zu verhindern, die bereits vorhandenen und durch Hydratation neu gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips, Halbhydrat oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Polykondensationsprodukte und Copolymere eingesetzt.

In der WO 2006/042709 werden Polykondensationprodukte auf Basis einer aromatischen oder heteroaromatischen Verbindung (A) mit 5 bis 10 C-Atomen bzw. Heteroatomen mit mindestens einem Oxyethylen- oder Oxypropylen-Rest und einem Aldehyd (C) ausgewählt aus der Gruppe Formaldehyd, Glyoxylsäure und Benzaldehyd oder Mischungen davon beschrieben, welche im Vergleich zu den herkömmlich verwendeten Poykondensationsprodukten eine verbesserte verflüssigende Wirkung von anorganischen Bindemittel-Suspensionen bewirken und diesen Effekt über einen längeren Zeitraum aufrechterhalten ("slump Erhalt"). In einer besonderen Ausführungsform kann es sich hierbei auch um phosphatierte Polkondensationsprodukten handeln. Für die Polykondensation werden als Katalysatoren Mineralsäuren eingesetzt.

Um eine bessere Lagerstabilität und bessere Produkteigenschaften zu erhalten, werden die nach dem Stand der Technik erhaltenen Reaktionslösungen mit basischen Verbindungen, insbesondere Natriumhydroxid behandelt. Hierbei hat es sich als nachteilig erwiesen, dass die verwendeten Katalysatoren bei der Umsetzung mit den basischen Verbindungen als Salze anfallen, welche im Poykondensationsprodukt nur schlecht löslich sind. Dies kann zu einer nicht gewünschten Präzipitation der entsprechenden Salze im Endprodukt führen. Hieraus resultiert in der Praxis in der Regel eine Verdünnung der erhaltenen Lösungen auf Konzentrationen von maximal 30 Gew.% Feststoffgehalt. Alternativ können zur Herstellung konzentrierter Produktlösungen die gebildeten Salze durch verschiedene Verfahren umständlich abgetrennt werden.

Der vorliegenden Erfindung lag somit die Aufgabe zugrunde, ein wirtschaftliches Verfahren zur Herstellung eines phosphatierten Polykondensationsproduktes bereitzustellen, welches sich gut als Fließmittel/Wasserreduktionsmittel für Beton eignet, sowie in einfacher Weise und zu niedrigen Kosten hergestellt werden kann. Insbesondere sollte das Verfahren ein neutralisiertes phosphatiertes Polykondensationsprodukt liefern, welches ohne weitere Aufreinigung hohe Feststoffgehalte aufweisen kann, ohne das es hierbei zu einer Präzipitation von Salzen kommt.

Die Aufgabe wurde dadurch gelöst, dass als Katalysator für die Polykondensation mindestens eine Sulfonsäure eingesetzt wird. Insbesondere haben sich gesättigte und ungesättigte Alkylsulfonsäuren wie Methansulfonsäure, Octylsulfonsäure, Dodecylsulfonsäure, Vinylsulfonsäure und/oder Allylsulfonsäure sowie aromatische Sulfonsäuren wie Para-Toluolsulfonsäure, Benzolsulfonsäure, und/oder Dodecylbenzolsulfonsäure, als besonders geeignet erwiesen.

Überraschend hat sich hierbei herausgestellt, dass sich Sulfonsäuren nicht nur sehr gut als Katalysatoren für die Polykondensation eignen, sondern die bei der Neutralisation gebildeten Salze auch eine sehr gute Löslichkeit in den wässrigen phosphatierten Polykondensationsprodukten besitzen.

In einer bevorzugten Ausführungsform liegt das erfindungsgemäße phosphatierte Polykondensationsprodukt in wässriger Lösung vor, die 35 bis 75 Gew.-% Wasser und 25 bis 65 Gew.-% gelöste Trockenmasse, besonders bevorzugt 40 bis 60 Gew.-% Wasser und 40 bis 60 Gew.-% gelöste Trockenmasse, insbesondere 45 bis 55 Gew.-% Wasser und 45 bis 55 Gew.-% gelöste Trockenmasse enthält. Die Trockenmasse besteht im Wesentlichen aus dem wasserfreien phosphatierten Polykondensationsprodukt, wobei aber auch vorteilhaft weitere Komponenten wie Entschäumer, Luftporenbildner und andere Hilfsmittel enthalten sein können.

In einer bevorzugten Ausführungsform enthält die Reaktionsmischung mindestens
(I) ein eine Polyetherseitenkette und einen Aromaten oder Heteroaromaten aufweisendes Monomer,
(II) ein einen Aromaten oder Heteroaromaten aufweisendes phosphatiertes Monomer und
(IV) ein eine Aldehydgruppe aufweisendes Monomer.

Das molare Verhältnis der eingesetzten Monomere (I), (II) und (IV) kann in weiten Bereichen variiert werden. Als zweckmäßig hat es sich erwiesen, dass das Molverhältnis der eingesetzten Monomeren (IV) : [(I) + (II)] 1 : 0,5 bis 2, insbesondere 1 : 0,9 bis 2 beträgt. Das Molverhältnis der eingesetzten Monomeren (I) : (II) liegt normalerweise bei 1 : 10 bis 10 : 1, insbesondere 1 : 5 bis 3 : 1.

In einer besonders bevorzugten Ausführungsform enthält die Reaktionsmischung mindestens
(I) ein eine Polyetherseitenkette und einen Aromaten oder Heteroaromaten aufweisendes Monomer,
(III) ein einen Aromaten oder Heteroaromaten aufweisendes Monomer, wobei (III) während der Umsetzung mindestens teilweise phosphatiert wird und das Monomer (II) und/oder im Polykondensationsprodukt die Struktureinheit (II) bildet und
(IV) ein eine Aldehydgruppe aufweisendes Monomer und ein Phosphatierungsmittel.

Die Monomeren (I), (II) und (III) sind hierbei mit den gebildeten Struktureinheiten (I), (II) und (III) im Polykondensationsprodukt identisch.

Das molare Verhältnis der eingesetzten Monomere (I), (II), (III) und (IV) kann in weiten Bereichen variiert werden. Als zweckmäßig hat es sich erwiesen, dass das Molverhältnis der eingesetzten Monomeren (IV) : [(I) + (III)] 1 : 0,5 bis 2, insbesondere 1 : 0,9 bis 2 beträgt.

Das Molverhältnis der eingesetzten Monomeren (I) : (III) liegt normalerweise bei 1 : 10 bis 10 : 1, insbesondere 1 : 5 bis 3 : 1.

In einer bevorzugten Ausführungsform wird das Molverhältnis der Struktureinheiten (II) : (III) auf 1 : 0,005 bis 1 : 10, weiterhin 1 : 0,01 bis 1 : 1 , insbesondere 1 : 0,01 bis 1 : 0,2 und besonders bevorzugt 1 : 0,01 bis 1 : 0,1 eingestellt.

Die Monomeren (I), (II), (III) und (IV) und im Polykondensationsprodukt die Struktureinheit (I), (II) und (III) werden bevorzugt durch folgende allgemeine Formeln repräsentiert 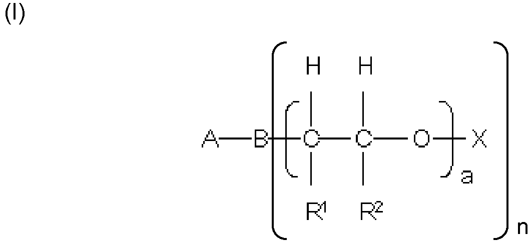
mit
   A gleich oder verschieden sowie repräsentiert durch eine substituierte oder unsubstituierte aromatische oder heteroaromatische Verbindung mit 5 bis 10 C-Atomen
mit
   B gleich oder verschieden sowie repräsentiert durch N, NH oder O
mit
   n = 2 falls B = N und n = 1 falls B = NH oder O
mit
   R¹ und R² unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit
   a gleich oder verschieden sowie repräsentiert durch eine ganze Zahl von 1 bis 300
mit X
   gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H 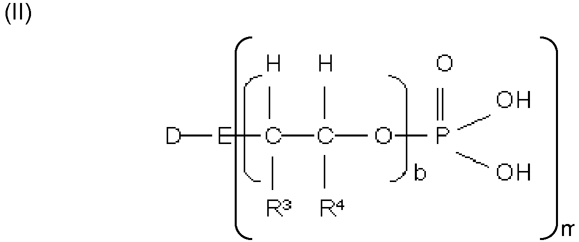 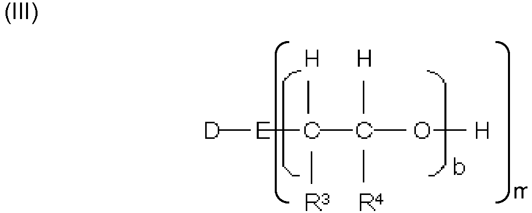
für (II) und (III)
mit
   D gleich oder verschieden sowie repräsentiert durch eine substituierte oder unsubstituierte aromatische oder heteroaromatische Verbindung mit 5 bis 10 C-Atomen
mit
   E gleich oder verschieden sowie repräsentiert durch N, NH oder O
mit
   m = 2 falls E = N und m = 1 falls E = NH oder O
mit
   R³ und R⁴ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit b
   gleich oder verschieden sowie repräsentiert durch eine ganze Zahl von 0 bis 300

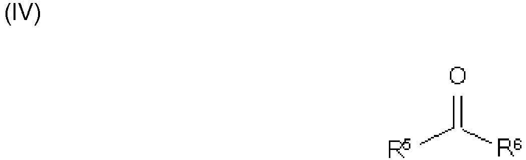

mit
   R⁵ gleich oder verschieden und repräsentiert durch H, CH₃, COOH oder eine substituierte oder unsubstituierte aromatische oder heteroaromatische Verbindung mit 5 bis 10 C-Atomen.
mit
   R⁶ gleich oder verschieden und repräsentiert durch H, CH₃, COOH oder eine substituierte oder unsubstituierte aromatische oder heteroaromatische Verbindung mit 5 bis 10 C-Atomen.

Hierbei werden R⁵ und R⁶ in Monomer (IV) unabhängig voneinander bevorzugt durch H, COOH und/oder Methyl repräsentiert.

Die Gruppen A und D der Monomeren (I), (II) und (III) und der Struktureinheiten (I), (II) und (III) werden meist durch Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl repräsentiert, wobei A und D unabhängig voneinander gewählt werden können und auch jeweils aus einem Gemisch der genannten Verbindungen bestehen können. Die Gruppen B und E werden unabhängig voneinander bevorzugt durch O repräsentiert.

Die Reste R¹, R², R³ und R⁴ können unabhängig voneinander gewählt werden und werden bevorzugt durch H, Methyl, Ethyl oder Phenyl, besonders bevorzugt durch H oder Methyl und insbesondere bevorzugt durch H repräsentiert.

Bevorzugt wird a in Monomer (I) und Struktureinheit (I) durch eine ganze Zahl von 5 bis 280, insbesondere 10 bis 160 und besonders bevorzugt 12 bis 120 repräsentiert und b in Monomer (II) und (III) und Struktureinheit (II) und (III) durch eine ganze Zahl von 0 bis 10, bevorzugt 1 bis 7 und besonders bevorzugt 1 bis 5. Die jeweiligen Reste, deren Länge durch a bzw. b definiert wird, kann hierbei aus einheitlichen Baugruppen bestehen, es kann aber auch zweckmäßig sein, dass es sich um eine Mischung aus unterschiedlichen Baugruppen handelt. Weiterhin können die Reste in den Monomeren (I) bzw. (II) und (III) und den Struktureinheiten (I) bzw. (II) und (III) unabhängig voneinander jeweils die gleiche Kettenlänge besitzen, wobei a bzw. b jeweils durch eine Zahl repräsentiert wird. Es wird aber in der Regel zweckmäßig sein, dass es sich jeweils um Mischungen mit unterschiedlichen Kettenlängen handelt, so dass die Reste der Monomeren oder Struktureinheiten im Polykondensationsprodukt für a und unabhängig für b unterschiedliche Zahlenwerte aufweisen.

Häufig weist das erfindungsgemäße phosphatierte Polykondensationsprodukt ein gewichtsmittleres Molekulargewicht von 4000 g/mol bis 150.000 g/mol, vorzugsweise 10.000 bis 100.000 g/mol und besonders bevorzugt 20.000 bis 75.000 g/mol auf.

In einer besonderen Ausführungsform sieht die vorliegende Erfindung verschiedene Varianten der Reaktionsführung vor. Eine Möglichkeit besteht darin, dass die Monomeren (I), (II) und (IV) in Gegenwart der Sulfonsäure zur Reaktion gebracht werden. Es kann aber auch zweckmäßig sein, die Phosphatierung des Monomers (III) zum Monomer (II) und die folgende Umsetzung mit den Monomeren (I), (IV) und der Sulfonsäure in einer Reaktionsmischung durchzuführen. Hierunter ist zu verstehen, dass die in der Reaktionslösung gebildete phosphatierte Komponente weder aufgereinigt noch isoliert wird. Es ist hierbei nicht notwendig, dass das Monomer (III) vollständig phosphatiert wird. Es kann sogar vorteilhaft sein, wenn das unumgesetzte Monomer (III) im Polykondensationsprodukt vorliegt.

Die Phosphatierung des Monomers (III) kann vor, während oder nach der Polykondensation durchgeführt werden. Hierbei ist es als bevorzugt anzusehen, sowohl die Phosphatierung als auch die Polykondensation in einem Reaktionsbehältnis durchzuführen.

Eine Variante besteht darin, dass das Monomer (III) zunächst mit einem Phosphatierungsmittel umgesetzt wird und das so erhaltene Monomer (II) mit den Monomeren (I), (IV), der Sulfonsäure und ggf. Monomer (III) polykondensiert wird. Das Monomer (III) kann hierbei aus einer nicht vollständigen Umsetzung bei der Phosphatierungsreaktion stammen oder im Anschluss an die Phosphatierungsreaktion dem Reaktionsgemisch gezielt zugesetzt werden.

Es ist aber auch möglich, die Monomeren (I), (III) und (IV) in Gegenwart der Sulfonsäure einer Polykondensation zu unterwerfen und das erhaltene Polykondensationsprodukt im Anschluss mit einem Phosphatierungsmittel umzusetzen. In einer weiteren Ausführungsform werden die Monomeren (I), (III), (IV), die Sulfonsäure und das Phosphatierungsmittel gleichzeitig zur Reaktion gebracht.

Als Phosphatierungsmittel haben sich hierbei insbesondere Polyphosphorsäure und/oder Phosphorpentoxid als geeignet erwiesen.

Die Polykondensation und ggf. die Phosphatierung werden vorteilhaft bei einer Temperatur zwischen 20 und 140°C und einem Druck zwischen 1 und 10 bar durchführt. Insbesondere hat sich ein Temperaturbereich zwischen 80 und 110°C als zweckmäßig erwiesen. Die Reaktionsdauer kann je nach Temperatur, der chemischen Natur der eingesetzten Monomeren und dem angestrebten Vernetzungsgrad zwischen 0,1 und 24 Stunden betragen. Wenn der gewünschte Vernetzungsgrad erreicht ist, was beispielsweise auch über die Messung der Viskosität der Reaktionsmischung bestimmt werden kann, wird die Reaktionsmischung abgekühlt.

Gemäß einer besonderen Ausführungsform wird das Reaktionsgemisch nach Abschluss der Kondensations- und ggf. der Phosphatierungsreaktion einer thermischen Nachbehandlung bei einem pH zwischen 8 und 13 und einer Temperatur zwischen 60 und 130°C unterworfen. Durch die thermische Nachbehandlung, die vorteilhaft zwischen 5 Minuten und 5 Stunden beträgt, ist es möglich, den Aldehydgehalt, insbesondere den Formaldehydgehalt in der Reaktionslösung deutlich zu erniedrigen.

In einer weiteren besonderen Ausführungsform sieht die vorliegende Erfindung vor, dass man zur Reduzierung des Aldehydgehalts das Reaktionsgemisch nach Abschluss der Kondensation- und Phosphatierungsreaktion einer Vakuum-Nachbehandlung bei Drücken zwischen 10 und 900 mbar unterwirft. Des Weiteren sind aber auch andere, dem Fachmann bekannte Methoden zur Reduzierung des Formaldehyd-Gehalts einsetzbar. Ein Beispiel ist die Zugabe geringer Mengen Natriumbisulfit, Ethylenharnstoff und/oder Polyethylenimin.

Die erhaltenen phosphatierten Polykondensationsprodukte können direkt als Fließhilfsmittel eingesetzt werden. Um eine bessere Lagerstabilität und bessere Produkteigenschaften zu erhalten ist es vorteilhaft, die Reaktionslösungen mit basischen Verbindungen zu behandeln. Es ist deshalb als bevorzugt anzusehen, das Reaktionsgemisch nach Abschluss der Kondensations- und ggf. der Phosphatierungsreaktion mit einer basischen Natrium-, Kalium-, Ammonium- oder Calcium-Verbindungen umzusetzen. Natriumhydroxid, Kaliumhydroxid, Ammoniumhydroxid oder Calciumhydroxid haben sich hierbei als besonders zweckmäßig erwiesen, wobei es als bevorzugt anzusehen ist, das Reaktionsgemisch zu neutralisieren. Als Salze der phosphatierten Polykondensationsprodukte kommen aber auch andere Alkali- und Erdalkalimetallsalze sowie Salze organischer Amine in Frage. Eine bevorzugte Ausführungsform sieht vor, das Reaktionsgemisch nach Abschluss der Kondensations- und ggf. der Phosphatierungsreaktion mit basischen Natrium- und/oder Calcium-Verbindungen umzusetzen.

Weiterhin ist die Herstellung von Mischsalzen der phosphatierten Polykondensationsprodukte als bevorzugt anzusehen. Diese können zweckmäßig durch die Umsetzung der Polykondensationsprodukte mit mindestens zwei basischen Verbindungen hergestellt werden.

So können durch eine gezielte Auswahl geeigneter Alkali- und/oder ErdalkaliMetallhydroxide durch Neutralisation Salze der erfindungsgemäßen Polykondensationsprodukte hergestellt werden, mit denen die Dauer der Verarbeitbarkeit wässriger Suspensionen von anorganischen Bindemitteln und insbesondere von Beton beeinflusst werden kann. Während im Fall des Natriumsalzes eine Verringerung der Verarbeitbarkeit über die Zeit zu beobachten ist, findet im Fall des Calciumsalzes des identischen Polymers eine komplette Umkehrung dieses Verhaltens statt, wobei zu Beginn eine geringere Wasserreduktion (geringer Slump) auftritt, welche mit der Zeit zunimmt. Dies führt dazu, dass Natriumsalze der phosphatierten Polykondensationsprodukte über die Zeit zu einer Abnahme der Verarbeitbarkeit der bindemittehaltigen Masse, wie z.B. Beton oder Mörtel führen, während die entsprechenden Calciumsalze mit der Zeit zu einer verbesserten Verarbeitbarkeit führen. Durch eine geeignete Wahl der Menge an eingesetzten Natrium- und Calciumsalzen der phosphatierten Polykondensationsprodukte kann somit die Entwicklung der Verarbeitbarkeit von bindemittehaltigen Massen über die Zeit gesteuert werden. Zweckmäßig werden die entsprechenden phosphatierten Polykondensationsprodukte, welche aus Natrium- und Calciumsalzen bestehen, durch Umsetzung mit einer Mischung aus basischen Calcium- und Natriumverbindungen, insbesondere Calciumhydroxid und Natriumhydroxid, hergestellt, wobei eine Neutralisation des Reaktionsgemisches besonders bevorzugt ist.

Ein weiterer Gegenstand der vorliegenden Erfindung sind schließlich phosphatierte Polykondensationsprodukte, welche gemäß dem vorstehend beschriebenen Verfahren herstellbar sind.

Weiterhin betrifft die Erfindung auch die Verwendung des erfindungsgemäßen phosphatierten Polykondensationsproduktes als Zusatzmittel für wässrige Suspensionen von hydraulischen und/oder latenthydraulischen Bindemitteln.

Typischerweise liegt das hydraulische Bindemittel als Zement, Kalk, Gips, Halbhydrat oder Anhydrit oder aus Mischungen dieser Komponenten, bevorzugt als Zement vor. Das latenthydraulische Bindemittel liegt normalerweise als Flugasche, Trass oder Hochofenschlacke vor.

Bezogen auf das Gewicht des anorganischen Bindemittels wird das phosphatierte Polykondensationsprodukt in einer Menge von 0,01 bis 10 Gew.-%, insbesondere 0,05 bis 5 Gew.-%, eingesetzt.

Bei der Herstellung von phosphatierten Polykondensationsprodukten gemäß Stand der Technik müssen aufgrund der Verwendung von starken Mineralsäuren, insbesondere Salzsäure und Schwefelsäure, Reaktoren aus emailliertem Stahl oder besonders korrosionsbeständigen und teuren Speziallegierungen verwendet werden. Bei der erfindungsgemäßen Verwendung von Sulfonsäuren ist es deshalb als besonders vorteilhaft anzusehen, dass die Reaktion in Standard-Reaktoren aus Edelstahl durchgeführt werden kann. Das erfindungsgemäße Verfahren zur Herstellung der phosphatierten Polykondensationsprodukte ist weiterhin sehr kostengünstig, wobei keine weitere Aufreinigung von Zwischenstufen notwendig ist. Insbesondere entstehen bei dem erfindungsgemäßen Verfahren keine Abfallstoffe die entsorgt werden müssen. Somit stellt das beanspruchte Verfahren auch aus Umweltgesichtspunkten einen weiteren Fortschritt des Stands der Technik da. Die erhaltene Reaktionsmischung kann nach Behandlung mit basischen Verbindungen direkt dem Verwendungszweck als Zusatzmittel für Baustoffmischungen zugeführt werden. Hierbei ist es besonders vorteilhaft, dass es nach der Behandlung mit basischen Verbindungen zu keiner Präzipitation von Salzen kommt, wenn der Feststoffgehalt der Produktlösung bei 20°C über 30% liegt. Die erfindungsgemäß erhaltenen Reaktionsmischung, welche in einer bevorzugten Ausführungsform einen Feststoffanteil von 65% enthalten kann, besitzen als weiteren Vorteil eine verbesserte Mischbarkeit mit anderen organischen Additiven, insbesondere Entschäumern und Luftporenbildnern. Weiterhin führen höher konzentrierte Lösungen zu einer Herabsetzung der Kosten für Transport und Lagerhaltung. Die der Erfindung zu Grunde liegende Aufgabenstellung wird somit in vollem Umfang gelöst.

Die vorliegende Erfindung soll im Folgenden näher anhand von Ausführungsbeispielen beschrieben werden.

### Beispiele

### Beispiel 1 (Vergleichsbeispiel)

Ein beheizbarer, mit Rührer ausgestatteter Reaktor wird mit 445 Teilen Poly-(ethylenoxid)monophenylether (mittleres Molekulargewicht 5000 g/mol), 34,9 Teilen konzentrierter Schwefelsäure, 23,2 Teilen Wasser, 57,7 Teilen Oligoethylenglycolmonophenylether-Phosphorsäureester (mittleres Molekulargewicht 324 g/mol) und 26,7 Teilen 30%ige Formaldehydlösung befüllt. Das Reaktionsgemisch wird unter Rühren 6 Stunden auf 105 °C erhitzt. Danach lässt man abkühlen und neutralisiert mit 50%iger Natronlauge auf pH 6,5 - 7.
Das so erhaltene Polykondensat weist gemäß GPC ein mittleres Molekulargewicht von M_{w} = 28500 g/mol bei einer Polydispersität von ca. 1,8 auf.

### Beispiel 2

Ein beheizbarer, mit Rührer ausgestatteter Reaktor wird mit 600 Teilen Poly-(ethylenoxid)monophenylether (mittleres Molekulargewicht 5000 g/mol), 47,2 Teilen konzentrierter Methansulfonsäure, 12 Teilen Wasser, 110 Teilen Oligoethylenglycolmonophenylether-Phosphorsäureester (mittleres Molekulargewicht 368 g/mol) und 14,7 Teilen Paraformaldehyd befüllt. Das Reaktionsgemisch wird unter Rühren 3 Stunden auf 115 °C erhitzt. Danach lässt man abkühlen und neutralisiert mit 50%iger Natronlauge auf pH 6,5 - 7.
Das so erhaltene Polykondensat weist gemäß GPC ein mittleres Molekulargewicht von M_{w} = 33500 g/mol bei einer Polydispersität von ca. 2,0 auf.

Austestung der Phasenstabilität der Polykondensationsprodukte unter zwei verschiedenen Lagerbedingungen:
Hierbei soll untersucht werden, ob die erfindungsgemäßen Polykondensate bei höheren Feststoffgehalten dauerhaft gelagert werden können, ohne dass es zu unerwünschten Phasenseparationserscheinungen (Salzausfällungen) kommt.

Die in Beispiel 1 und 2 beschriebenen Polykondensate werden hierzu jeweils in 4 Teilmengen aufgeteilt. Diese Teilmengen werden mit unterschiedlichen Wassermengen aufgefüllt, so dass jeweils vier Proben mit unterschiedlichen Feststoffgehalten erhalten werden (siehe Tabelle 1):

**Tabelle1**

| | Feststoffgehalt in Gew.-% | | | |
|---|---|---|---|---|
| Beispiel 1 | 29,8 | 36,1 | 47,8 | 60,1 |
| Beispiel 2 | 30,4 | 34,9 | 48,3 | 58,5 |

Jede der in Tabelle 1 aufgeführten 8 Teilmengen wird in zwei gleichgroße Teilmengen aufgeteilt die unter zwei unterschiedlichen Bedingungen gelagert werden: Eine Serie A von 8 Teilmengen wird bei Raumtemperatur gelagert, während die andere Serie B im 24-Stundenrythmus abwechselnd im Kühlschrank bei 4 °C und bei Raumtemperatur gelagert wird. Durch diese starken Temperaturschwankungen werden Phasenseparationen im Allgemeinen deutlich beschleunigt. Beide Serien werden über einen Zeitraum von 6 Wochen beobachtet. Die Ergebnisse sind in den Tabellen 2 und 3 zusammengefaßt.

Die Austestungen zeigen klar, dass Polykondensate gemäß Beispiel 1 (Vergleichsbespiel) nur bei Feststoffgehalten unter 30 Gew.-% dauerhaft phasenstabil gelagert werden können, während erfindungsgemäße Polykondensate gemäß Beispiel 2 bei deutlich höheren Feststoffgehalten von bis zu fast 50 Gew.-% dauerhaft phasenstabil gelagert werden können.

**Tabelle 2**

| Serie A (Raumtemp.) | Feststoffgehalt in Gew.-% | | | |
|---|---|---|---|---|
| Beispiel 1 | 29,8 | 36,1 | 47,8 | 60,1 |
| Phasenstabilität | klare Lösung, stabil über 6 Wochen | klare Lösung, Salzausfällung ab 16. Tag | trübe Lösung, Salzausfällung ab 1. Tag | trübe Lösung, Salzausfällung ab 1. Tag |
| Beispiel 2 | 30,4 | 34,9 | 48,3 | 58,5 |
| Phasenstabilität | klare Lösung, stabil über 6 Wochen | klare Lösung, stabil über 6 Wochen | klare Lösung, stabil über 6 Wochen | trübe Lösung Salzausfällung ab 9. Tag |

**Tabelle 3**

| Serie B (alternierend 4°C, ca. 21 °C) | Feststoffgehalt in Gew.-% | | | |
|---|---|---|---|---|
| Beispiel 1 | 29,8 | 36,1 | 47,8 | 60,1 |
| Phasenstabilität | klare Lösung, stabil über 6 Wochen | klare Lösung, Salzausfällung ab 3. Tag | trübe Lösung, Salzausfällung ab 1. Tag | trübe Lösung, Salzausfällung ab 1. Tag |
| Beispiel 2 | 30,4 | 34,9 | 48,3 | 58,5 |
| Phasenstabilität | klare Lösung, stabil über 6 Wochen | klare Lösung, stabil über 6 Wochen | klare Lösung, stabil über 6 Wochen | trübe Lösung Salzausfällung ab 3. Tag |

### Beispiel 3

Ein beheizbarer, mit Rührer ausgestatteter Reaktor wird mit 800 Teilen Poly-(ethylenoxid)monophenylether (mittleres Molekulargewicht 5000 g/mol), 65,8 Teilen 70%iger Methansulfonsäure, 147 Teilen Oligoethylenglycolmonophenylether-Phosphorsäureester (mittleres Molekulargewicht 368 g/mol) und 18,6 Teilen Paraformaldehyd befüllt. Das Reaktionsgemisch wird unter Rühren 5 Stunden auf 115 °C erhitzt. Danach lässt man abkühlen und neutralisiert mit 50%iger Natronlauge auf pH 6,5 - 7. Abschließend wird durch Zugabe von Wasser auf einen Feststoffgehalt von 46-48% verdünnt.
Das so erhaltene Polykondensat weist gemäß GPC ein mittleres Molekulargewicht von M_{w} = 33200 g/mol bei einer Polydispersität von ca. 1,9 auf.

### Beispiel 4

Ein beheizbarer, mit Rührer ausgestatteter Reaktor wird mit 600 Teilen Poly-(ethylenoxid)monophenylether (mittleres Molekulargewicht 5000 g/mol), 105,4 Teilen 65%iger Para-Toluolsulfonsäure, 110 Teilen Oligoethylenglycolmonophenylether-Phosphorsäureester (mittleres Molekulargewicht 368 g/mol) und 14 Teilen Paraformaldehyd befüllt. Das Reaktionsgemisch wird unter Rühren 5 Stunden auf 110 °C erhitzt. Danach lässt man abkühlen und neutralisiert mit 50%iger Natronlauge auf pH 6,5 - 7. Abschließend wird durch Zugabe von Wasser auf einen Feststoffgehalt von 46-48% verdünnt.
Das so erhaltene Polykondensat weist gemäß GPC ein mittleres Molekulargewicht von M_{w} = 19370 g/mol bei einer Polydispersität von ca. 2,1 auf.

### Beispiel 5

Ein beheizbarer, mit Rührer ausgestatteter Reaktor wird mit 600 Teilen Poly-(ethylenoxid)monophenylether (mittleres Molekulargewicht 5000 g/mol), 82,7 Teilen Paratoluolsulfonsäure, 110 Teilen Oligoethylenglycolmonophenylether-Phosphorsäureester (mittleres Molekulargewicht 368 g/mol) und 14 Teilen Paraformaldehyd befüllt. Das Reaktionsgemisch wird unter Rühren 5 Stunden auf 115 °C erhitzt. Danach lässt man abkühlen und neutralisiert mit 50%iger Natronlauge auf pH 6,5 - 7. Abschließend wird durch Zugabe von Wasser auf einen Feststoffgehalt von 46-48% verdünnt.
Das so erhaltene Polykondensat weist gemäß GPC ein mittleres Molekulargewicht von M_{w} = 24560 g/mol bei einer Polydispersität von ca. 2,0 auf.

Anwendungstest: Reduktion des Wasserbedarfs eines Mörtels unter Beibehaltung der Konsistenz.

### Mischablauf Mörtelmischung:

Es werden 600 g Zementpulver trocken homogenisiert und in einen RILEM-Mischer gegeben. Dann wird die entsprechend einem W/Z-Wert benötigte Menge Wasser zugegeben und 30 s bei 140 U/min (Stufe I) gemischt. Die Zugabe des Sandgemisches erfolgt anschließend bei laufendem Mischer mit Hilfe eines Trichters und es wird 30 s bei 140 U/min (Stufe I) gemischt. Nach einer Mischpause von 1.5 min werden die Ränder des Mischers gesäubert und eine entsprechende Menge Fließmittel zugegeben. Es wird weitere 60 s bei 285 U/min (Stufe II) gemischt und anschließend das Fließmaß (Ausbreitmaß) durch 10 maliges Klopfen auf einem Klopftisch mit Hägermann-Konus bestimmt (DIN EN 1015-3).
Die Dosierung der Fließmittel wird hierbei konstant gehalten und das Wasser-Zement-Verhältnis so angepasst, dass ein Ausbreitmaß von ca. 24,5 cm erhalten wird. Zur Anwendung kommt ein Mörtel basierend auf Karlstadt CEM I 42,5 R und einem Sand-Zement-Verhältnis von 2,2. Der Sand besteht aus einer Mischung von 70% Normsand und 30% Quarzsand.

Die Ergebnisse der Anwendungstests, der nach den Beispielen 1 bis 4 erhaltenen Produkte, werden in der folgenden Tabelle dargestellt:

| Beispiel | Dosierung [% Feststoff bez. auf Zement] | W/Z | Ausbreitmaß [cm] |
|---|---|---|---|
| Nullwert | - | 0,570 | 24,7 |
| 1 | 0,2 | 0,425 | 25 |
| 2 | 0,2 | 0,415 | 24,8 |
| 3 | 0,2 | 0,428 | 24,3 |
| 4 | 0,2 | 0,435 | 24,0 |
| 5 | 0,2 | 0,425 | 24,4 |

## Patentansprüche

1. Verfahren zur Herstellung eines phosphatierten Polykondensationsproduktes,
**dadurch gekennzeichnet, dass** mindestens eine Sulfonsäure als Katalysator eingesetzt wird.

2. Verfahren nach Anspruch 1, **dadurch gekennzeichnet, dass** es sich bei der Sulfonsäure um eine gesättigte und/oder ungesättigte Alkylsulfonsäure und/oder aromatische Sulfonsäure handelt.

3. Verfahren nach Anspruch 1 oder 2, **dadurch gekennzeichnet, dass** das Reaktionsprodukt in wässriger Lösung vorliegt, die 35 bis 75 Gew.-% Wasser und 25 bis 65 Gew.-% gelöste Trockenmasse enthält.

4. Verfahren nach den Ansprüchen 1 bis 3, **dadurch gekennzeichnet, dass** die Reaktionsmischung mindestens
(I) ein eine Polyetherseitenkette und einen Aromaten oder Heteroaromaten aufweisendes Monomer,
(II) ein einen Aromaten oder Heteroaromaten aufweisendes phosphatiertes Monomer und
(IV) ein eine Aldehydgruppe aufweisendes Monomer
enthält.

5. Verfahren nach Anspruch 4, **dadurch gekennzeichnet, dass** das Molverhältnis der eingesetzten Monomeren (IV) : [(I) + (II)] 1 : 0,5 bis 2 beträgt.

6. Verfahren nach Anspruch 4 oder 5, **dadurch gekennzeichnet, dass** das Molverhältnis der eingesetzten Monomeren (I) : (II) 1 : 10 bis 10 : 1 beträgt.

7. Verfahren nach den Ansprüchen 1 bis 3, **dadurch gekennzeichnet, dass** die Reaktionsmischung mindestens
(I) ein eine Polyetherseitenkette und einen Aromaten oder Heteroaromaten aufweisendes Monomer,
(III) ein einen Aromaten oder Heteroaromaten aufweisendes Monomer, wobei (III) während der Umsetzung mindestens teilweise phosphatiert wird und das Monomer (II) und/oder im Polykondensationsprodukt die Struktureinheit (II) bildet und
(IV) ein eine Aldehydgruppe aufweisendes Monomer und ein Phosphatierungsmittel
enthält.

8. Verfahren nach Anspruch 7, **dadurch gekennzeichnet, dass** das Molverhältnis der eingesetzten Monomeren (IV) : [(I) + (III)] 1 : 0,5 bis 2 beträgt.

9. Verfahren nach Anspruch 7 oder 8, **dadurch gekennzeichnet, dass** das Molverhältnis der eingesetzten Monomeren (I) : (III) 1 : 10 bis 10 : 1 beträgt.

10. Verfahren nach einem der Ansprüche 7 bis 9, **dadurch gekennzeichnet, dass** das Molverhältnis der Struktureinheiten (II) : (III) 1 : 0,005 bis 1 : 10 beträgt.

11. Verfahren nach einem der Ansprüchen 4 bis 10, **dadurch gekennzeichnet, dass** die Monomeren (I), (II), (III) und (IV) und im Polykondensationsprodukt die Struktureinheiten (I), (II) und (III) durch folgende allgemeine Formeln repräsentiert werden 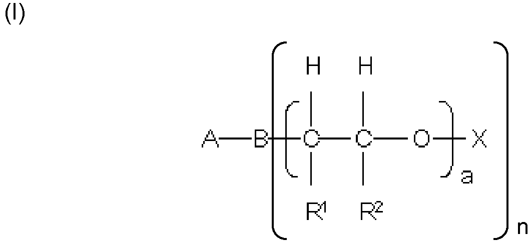
mit
A gleich oder verschieden sowie repräsentiert durch eine substituierte oder unsubstituierte aromatische oder heteroaromatische Verbindung mit 5 bis 10 C-Atomen
mit
B gleich oder verschieden sowie repräsentiert durch N, NH oder 0
mit
n = 2 falls B = N und n = 1 falls B = NH oder O
mit
R¹ und R² unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit
a gleich oder verschieden sowie repräsentiert durch eine ganze Zahl von 1 bis 300
mit X
gleich oder verschieden sowie repräsentiert durch einen verzweigten oder unverzweigten C₁- bis C₁₀-Alkylrest, C₅- bis C₈-Cycloalkylrest, Arylrest, Heteroaryl-rest oder H 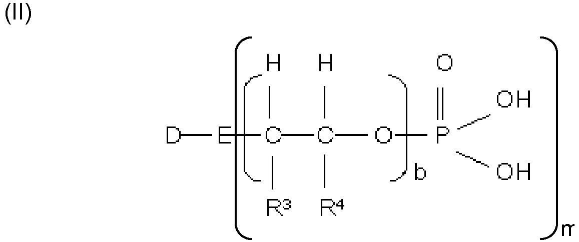 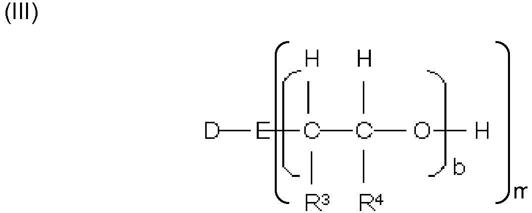
für (II) und (III)
mit
D gleich oder verschieden sowie repräsentiert durch eine substituierte oder unsubstituierte aromatische oder heteroaromatische Verbindung mit 5 bis 10 C-Atomen
mit
E gleich oder verschieden sowie repräsentiert durch N, NH oder O
mit
m = 2 falls E = N und m = 1 falls E = NH oder O
mit
R³ und R⁴ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit b
gleich oder verschieden sowie repräsentiert durch eine ganze Zahl von 0 bis 300 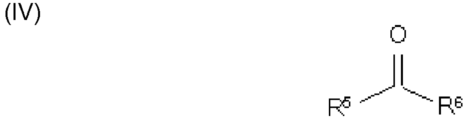
mit
R⁵ gleich oder verschieden und repräsentiert durch H, CH₃, COOH oder eine substituierte oder unsubstituierte aromatische oder heteroaromatische Verbindung mit 5 bis 10 C-Atomen.
mit
R⁶ gleich oder verschieden und repräsentiert durch H, CH₃, COOH oder eine substituierte oder unsubstituierte aromatische oder heteroaromatische Verbindung mit 5 bis 10 C-Atomen.

12. Verfahren nach einem der Ansprüche 1 bis 11, **dadurch gekennzeichnet, dass** die Polykondensation und ggf. die Phosphatierung bei einer Temperatur zwischen 20 und 140°C und einem Druck zwischen 1 und 10 bar durchführt werden.

13. Verfahren nach einem der Ansprüche 1 bis 13, **dadurch gekennzeichnet, dass** das Reaktionsgemisch nach Abschluss der Kondensations- und ggf. der Phosphatierungsreaktion mit basischen Natrium- und/oder Calcium-Verbindungen umsetzt wird.

14. Phosphatiertes Polykondensationsprodukt herstellbar gemäß einem Verfahren nach einem der Ansprüche 1 bis 13.

15. Verwendung eines phosphatierten Polykondensationsproduktes nach Anspruch 14, als Zusatzmittel für wässrige Suspensionen von hydraulischen und/oder latenthydraulischen Bindemitteln.

## Claims

1. Process for the preparation of a phosphated polycondensate, **characterized in that** at least one sulphonic acid is used as catalyst.

2. Process according to Claim 1, **characterized in that** the sulphonic acid is a saturated or unsaturated alkylsulphonic acid and/or aromatic sulphonic acid.

3. Process according to Claim 1 or 2, **characterized in that** the reaction product is present in aqueous solution which contains 35 to 75% by weight of water and 25 to 65% by weight of dissolved dry matter.

4. Process according to Claims 1 to 3, **characterized in that** the reaction mixture contains at least
(I) a monomer having a polyether side chain and an aromatic or heteroaromatic,
(II) a phosphated monomer having an aromatic or heteroaromatic and
(IV) a monomer having an aldehyde group.

5. Process according to Claim 4, **characterized in that** the molar ratio of the monomers used (IV):[(I) + (II)] is 1:0.5 to 2.

6. Process according to Claim 4 or 5, **characterized in that** the molar ratio of the monomers used (I):(II) is 1:10 to 10:1.

7. Process according to Claims 1 to 3, **characterized in that** the reaction mixture contains at least
(I) a monomer having a polyether side chain and an aromatic or heteroaromatic,
(III) a monomer having an aromatic or heteroaromatic, (III) being at least partially phosphated during the reaction and forming the monomer (II) and/or, in the polycondensate, the structural unit (II) and
(IV) a monomer having an aldehyde group and a phosphating agent.

8. Process according to Claim 7, **characterized in that** the molar ratio of the monomers used (IV):[(I) + (III)] is 1:0.5 to 2.

9. Process according to Claim 7 or 8, **characterized in that** the molar ratio of the monomers used (I):(III) is 1:10 to 10:1.

10. Process according to any of Claims 7 to 9, **characterized in that** the molar ratio of the structural units (II):(III) is 1:0.005 to 1:10.

11. Process according to any of Claims 4 to 10, **characterized in that**
the monomers (I), (II), (III) and (IV) and in the polycondensate the structural units (I), (II) and (III) are represented by the following general formulae 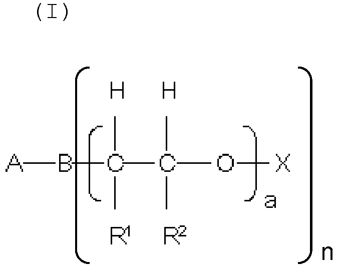
where
A are identical or different and are represented by a substituted or unsubstituted aromatic or heteroaromatic compound having 5 to 10 C atoms
where
B are identical or different and are represented by N, NH or 0
where
n = 2 if B = N and n = 1 if B = NH or 0
where
R¹ and R², independently of one another, are identical or different and are represented by a branched or straight-chain C₁- to C₁₀-alkyl radical, C₅- to C₈-cycloalkyl radical, aryl radical, heteroaryl radical or H
where
a are identical or different and are represented by an integer from 1 to 300
where
X are identical or different and are represented by a branched or straight-chain C₁- to C₁₀-alkyl radical, C₅- to C₈-cycloalkyl radical, aryl radical, heteroaryl radical or H 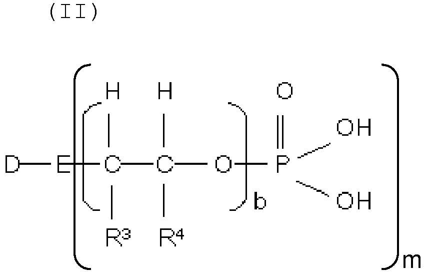 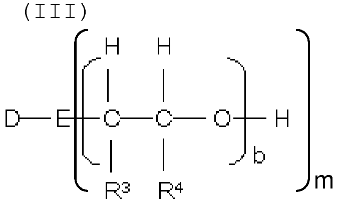
for (II) and (III)
where
D are identical or different and are represented by a substituted or unsubstituted aromatic or heteroaromatic compound having 5 to 10 C atoms
where
E are identical or different and are represented by N, NH or 0
where
m = 2 if E = N and m = 1 if E = NH or 0
where
R³ and R⁴, independently of one another, are identical or different and are represented by a branched or straight-chain C₁- to C₁₀-alkyl radical, C₅- to C₈-cycloalkyl radical, aryl radical, heteroaryl radical or H
where b
are identical or different and are represented by an integer from 0 to 300 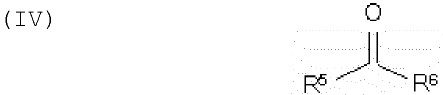
where
R⁵ are identical or different and are represented by H, CH₃, COOH or a substituted or unsubstituted aromatic or heteroaromatic compound having 5 to 10 C atoms
where
R⁶ are identical or different and are represented by H, CH₃, COOH or a substituted or unsubstituted aromatic or heteroaromatic compound having 5 to 10 C atoms.

12. Process according to any of Claims 1 to 11, **characterized in that** the polycondensation and, where appropriate, the phosphation are carried out at a temperature between 20 and 140°C and a pressure between 1 and 10 bar.

13. Process according to any of Claims 1 to 13, **characterized in that** the reaction mixture, after the condensation reaction and, where appropriate, the phosphation reaction has ended, is reacted with basic sodium and/or calcium compounds.

14. Phosphated polycondensate which can be prepared by a process according to any of Claims 1 to 13.

15. Use of a phosphated polycondensate according to Claim 14 as an admixture for aqueous suspensions of hydraulic and/or latently hydraulic binders.

## Revendications

1. Procédé pour la préparation d'un produit de polycondensation phosphaté, **caractérisé en ce qu'**on utilise au moins un acide sulfonique comme catalyseur.

2. Procédé selon la revendication 1, **caractérisé en ce qu'**il s'agit, pour l'acide sulfonique, d'un acide alkylsulfonique saturé et/ou insaturé et/ou d'un acide sulfonique aromatique.

3. Procédé selon la revendication 1 ou 2, **caractérisé en ce que** le produit de réaction se trouve en solution aqueuse, qui contient 35 à 75% en poids d'eau et 25 à 65% en poids de masse sèche dissoute.

4. Procédé selon les revendications 1 à 3, **caractérisé en ce que** le mélange réactionnel contient au moins
(I) un monomère présentant une chaîne latérale polyéther et un aromatique ou un hétéroaromatique,
(II) un monomère phosphaté présentant un aromatique ou un hétéroaromatique et
(IV) un monomère présentant un groupe aldéhyde.

5. Procédé selon la revendication 4, **caractérisé en ce que** le rapport molaire des monomères utilisés (IV):[(I) + (II)] vaut 1:0,5 à 2.

6. Procédé selon la revendication 4 ou 5, **caractérisé en ce que** le rapport molaire des monomères utilisés (I):(II) vaut 1:10 à 10:1.

7. Procédé selon les revendications 1 à 3, **caractérisé en ce que** le mélange réactionnel contient au moins
(I) un monomère présentant une chaîne latérale polyéther et un aromatique ou un hétéroaromatique,
(III) un monomère présentant un aromatique ou un hétéroaromatique, (III) étant au moins partiellement phosphaté pendant la transformation et formant le monomère (II) et/ou l'unité structurale (II) dans le produit de polycondensation et
(IV) un monomère présentant un groupe aldéhyde et un agent de phosphatation.

8. Procédé selon la revendication 7, **caractérisé en ce que** le rapport molaire des monomères utilisés (IV):[(I) + (III)] vaut 1:0,5 à 2.

9. Procédé selon la revendication 7 ou 8, **caractérisé en ce que** le rapport molaire des monomères utilisés (I):(III) vaut 1:10 à 10:1.

10. Procédé selon l'une quelconque des revendications 7 à 9, **caractérisé en ce que** le rapport molaire des unités structurales (II): (III) vaut 1:0,005 à 1:10.

11. Procédé selon l'une quelconque des revendications 4 à 10, **caractérisé en ce que** les monomères (I), (II), (III) et (IV) et, dans le produit de polycondensation, les unités structurales (I), (II) et (III) sont représentés par les formules générales suivantes 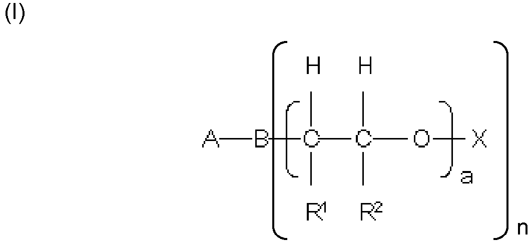
dans laquelle
A identique ou différent, représente un composé aromatique ou hétéroaromatique, substitué ou non substitué comprenant 5 à 10 atomes de carbone
dans laquelle
B identique ou différent, représente N, NH ou 0
dans laquelle
n = 2 si B = N et n = 1 si B = NH ou 0
dans laquelle
R¹ et R² sont, indépendamment l'un de l'autre, identiques ou différents et représentent un radical C₁-C₁₀-alkyle ramifié ou non ramifié, un radical C₅-C₈-cycloalkyle, un radical aryle, un radical hétéroaryle ou H
dans laquelle
a identique ou différent, représente un nombre entier de 1 à 300
dans laquelle
X identique ou différent, représente un radical C₁-C₁₀-alkyle ramifié ou non ramifié, un radical C₅-C₈-cycloalkyle, un radical aryle, un radical hétéroaryle ou H 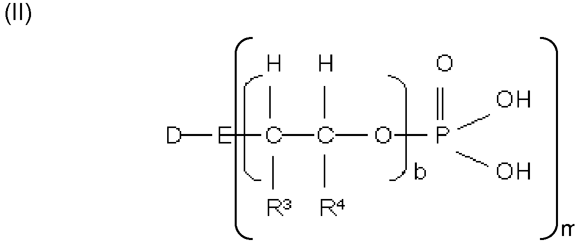 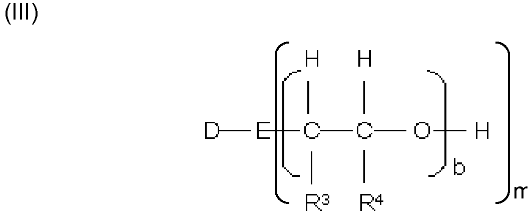
pour (II) et (III) :
dans lesquelles
D identique ou différent, représente un composé aromatique ou hétéroaromatique, substitué ou non substitué comprenant 5 à 10 atomes de carbone
dans lesquelles
E identique ou différent, représente N, NH ou 0
dans lesquelles
m = 2 si E = N et m = 1 si E = NH ou 0
dans laquelle
R³ et R⁴ sont, indépendamment l'un de l'autre, identiques ou différents et représentent un radical C₁-C₁₀-alkyle ramifié ou non ramifié, un radical C₅-C₈-cycloalkyle, un radical aryle, un radical hétéroaryle ou H
dans lesquelles
b identique ou différent, représente un nombre entier de 0 à 300 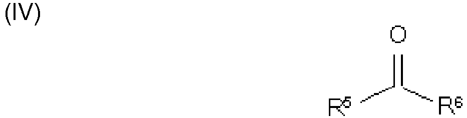
dans laquelle
R⁵ identique ou différent, et représente H, CH₃, COOH ou un composé aromatique ou hétéroaromatique, substitué ou non substitué comprenant 5 à 10 atomes de carbone,
dans laquelle
R⁶ identique ou différent, représente H, CH₃, COOH ou un composé aromatique ou hétéroaromatique, substitué ou non substitué comprenant 5 à 10 atomes de carbone.

12. Procédé selon l'une quelconque des revendications 1 à 11, **caractérisé en ce que** la polycondensation et le cas échéant la phosphatation sont réalisées à une température entre 20 et 140°C et à une pression entre 1 et 10 bars.

13. Procédé selon l'une quelconque des revendications 1 à 13, **caractérisé en ce qu'**après la fin de la réaction de condensation et le cas échéant de phosphatation, le mélange réactionnel est transformé avec des composés basiques de sodium et/ou de calcium.

14. Produit de polycondensation phosphaté pouvant être préparé selon un procédé selon l'une quelconque des revendications 1 à 13.

15. Utilisation d'un produit de polycondensation phosphaté selon la revendication 14 comme additif pour des suspensions aqueuses de liants hydrauliques et/ou hydrauliques latents.
